# EUROPEAN PATENT SPECIFICATION

(11) **EP 4 033 131 B1**
(45) Date of publication and mention of the grant of the patent: **09.04.2025**
(21) Application number: 20865523.3
(22) Date of filing: 27.08.2020
(51) Int. Cl.: H01F 7/06, H01F 27/40, H01F 5/02, H01F 5/04, H01F 27/02, H01F 41/00, F16K 31/06

(54) **RESIN MOLDED ELECTROMAGNETIC COIL, MANUFACTURING METHOD THEREOF, AND SOLENOID VALVE EQUIPPED WITH THE SAME**
IN HARZ GEGOSSENE ELEKTROMAGNETISCHE SPULE, VERFAHREN ZU DEREN HERSTELLUNG UND MIT DIESER SPULE AUSGESTATTETES ELEKTROMAGNETVENTIL
BOBINE ÉLECTROMAGNÉTIQUE MOULÉE EN RÉSINE, SON PROCÉDÉ DE FABRICATION ET L'ÉLECTROVANNE QUI EN EST ÉQUIPÉE

(30) Priority: 19.09.2019 JP 2019170125
(43) Date of publication of application: 27.07.2022
(73) Proprietor: Fujikoki Corporation, Tokyo 158-0082 (JP)
(72) Inventor: KOJIMA, Yasushi, Tokyo 158-0082 (JP); AMAIKE, Shotaro, Tokyo 158-0082 (JP)
(74) Representative: Ter Meer Steinmeister & Partner
(86) International application number: PCT/JP2020/032279
(87) International publication number: WO 2021/054071

(56) References cited:
- CN-U- 201 486 182
- CN-U- 203 335 991
- JP-A- 2002 031 052
- JP-A- 2002 031 052
- JP-A- H08 222 432
- JP-A- H08 222 432
- JP-A- S5 260 951
- JP-A- S54 155 419
- JP-A- S6 357 974
- US-A- 3 643 194
- US-A- 4 728 916
- US-A1- 2006 077 026
- US-A1- 2006 077 026
- US-B2- 7 507 122

## Description

### TECHNICAL FIELD

The present invention relates to a resin molded electromagnetic coil, and more particularly to a resin molded electromagnetic coil which is provided with a flywheel diode, and a solenoid valve provided with the same.

### BACKGROUND ART

A resin molded type electromagnetic coil has been used in a solenoid valve, the resin molded type electromagnetic coil being formed by covering a magnet wire (hereinafter, often refer simply to as "wire") wound to a bobbin or a connection terminal with a resin, and integrally molding a connector mating portion mated to a connector of an external device with the resin.

Further, in the electromagnetic coil mentioned above, in order to protect the other circuit elements such as a switching element from a surge voltage which is generated when switching energization of the electromagnetic coil, a flywheel diode (free-wheeling diode or hereinafter often refer simply to as "diode") may be provided.

Further, the following patent literatures are provided for disclosing the resin molded type electromagnetic coil provided with the diode as mentioned above.

US 4 728 916 A discloses an improved solenoid operated fluid control valve particularly adapted for use as a vacuum control switch in a motor vehicle. According to one aspect, a coil assembly is adapted to be wound and terminated using completely automated processes. This is provided through the use of a bobbin structure having protruding coil winding posts which position the start and finish ends of the coil wire. Terminal members are installed onto the bobbin and have terminal contact portions which can be folded onto the wire.

JP H08 222432A discloses a solenoid in which a coiling part whereupon a solenoid coil is to be wound and a guide for inserting an external connector are integrally formed. The external connector insertion guide for inserting an external connector is provided with terminal inserting parts which allow the outer side connecting parts of coil terminals to be inserted into the guide in a previously fixed direction. The solenoid is provided with a bobbin whereupon the guide for external connector insertion is formed.

JP 2002 031052 A discloses a control valve of a variable displacement compressor which is equipped with a control valve part to control the displacement of the variable displacement compressor, a valve to drive the control valve part, and a connector part wherewith a power supply for driving of the valve drive part is connected, wherein the connector part and the solenoid to constitute the valve drive part are formed in a single piece through molding process.

US 2006/077026 A1 discloses a field coil assembly of an electromagnetic clutch for a compressor, in which a coil wire of an electromagnetic coil body exposed to a protrusion of a bobbin is electrically connected with a compressing portion of a coil wire formed at one side portion of terminals mounted inside a sleeve, and the terminals and the electromagnetic coil body are molded with the resin.

US 7 507 122 B2 discloses a sleeve connector for an electromagnetic clutch having a first holder carrying a diode and a resistor for absorbing surge voltage and removing an induced magnetic field generated by an electromagnetic clutch field coil assembly. First and second terminals respectively connected with the diode and the resistor are held by a second holder so the terminals are insulated from each other. A molded plastic middle assembly encapsulates the diode, resistor, both holders and both terminals and joins the holders to each other.

### CITATION LIST

### PATENT LITERATURE

Patent Literature 1: Japanese Unexamined Patent Publication No. 2002-31052
Patent Literature 2: Japanese Unexamined Patent Publication No. 2003-124021

### SUMMARY OF INVENTION

### TECHNICAL PROBLEM

In the meantime, an insulating coated layer is thin in a winding wire of a coil in comparison with a normal electrical wire, and a mechanical strength of the winding wire itself before being molded with resin into a product is not enough strong. Therefore, there is a risk that the coated layer may be injured and damaged during manufacturing such as the wire winding time and the molding time.

Therefore, it is necessary to inspect in the final step for manufacturing whether or not the winding wire is short-circuited in the middle, or whether or not the coated layer is in a state in which the coated layer is injured to cause a future short-circuit. This inspection is carried out by a Layer Short test which applies a high-voltage pulse to the coil and analyzes an obtained resonance waveform. However, in order to more securely find a defective product, it is desirable to carry out the inspection in a state in which the product is as close to the finished product as possible.

In the electromagnetic coil provided with the flywheel diode for the purpose of protecting from the high-voltage surge voltage, the diode gets in the way of the test, and it is hard to carry out the high-precision inspection in a state in which the product is close to the finished product.

On the contrary, the inventions described in the patent literatures mentioned above neither point out the problem mentioned above nor show any coping process.

Therefore, an object of the present invention is to make it possible to carry out a high-precision product inspection of an electromagnetic coil provided with a flywheel diode, in particular, of a winding wire.

### SOLUTION TO PROBLEM

In order to solve the problem and achieve the object, a resin molded electromagnetic coil according to the present invention is a resin molded electromagnetic coil according to present claim 1, including a magnet wire which is wound to a bobbin, and a pair of connection terminals for electrically connecting the magnet wire to an external circuit, the resin molded electromagnetic coil being constructed by covering the magnet wire, and the pair of connection terminals with a mold resin, and including a flywheel diode which is connected between the pair of connection terminals. In the present application, the resin molded electromagnetic coil may be often referred simply to as "electromagnetic coil", "molded coil" or "coil", and the magnet wire may be often referred simply to as "wire".

The bobbin has a tubular portion to which the magnet wire is wound, a first flange which is disposed in one end portion of the tubular portion and protrudes outward from an outer peripheral surface of the tubular portion, and a second flange which is disposed in the other end portion of the tubular portion and protrudes outward from the outer peripheral surface of the tubular portion. In this case, "outward" means a direction which gets away from a center axis of the tubular portion.

The pair of connection terminals include a first terminal and a second terminal which are disposed so as to extend in parallel to each other and outward from an edge portion of the first flange. Further, the first terminal is provided with a diode connecting portion to which a starting point of the magnet wire is connected, and to which the flywheel diode is connectable. Further, the second terminal is provided with a diode connecting portion to which an ending point of the magnet wire is connected, and to which the flywheel diode is connectable.

Further, the flywheel diode is connected between the diode connecting portion of the first terminal and the diode connecting portion of the second terminal, and a covering layer made of the mold resin has a diode attaching hole which is communicated with the diode connecting portion of the first terminal and the diode connecting portion of the second terminal exposing the diode connecting portions at a surface of the diode attaching hole in such a manner that the flywheel diode is attachable after forming the covering layer, and is capable of receiving the flywheel diode. Further, the diode attaching hole is closed by a sealing material which is provided separately from the mold resin.

The term "mold resin" mentioned above is a resin which is used for forming with a mold such as an injection forming and a cast molding forming. Further, the term "provided separately" about the sealing material means being provided in a separate step from the mold resin, that is, not being provided together with (or simultaneously with) the mold resin. Further, it goes without saying that the sealing material is a material which has an electrical insulation property (non-conductive property) and can prevent the moisture and the foreign matter from entering, for the purpose of covering a connection portion between the diode and the connection terminal (the diode connecting portion). As the sealing material, an insulating resin, for example, an epoxy resin can be preferably used. The sealing material may be a different material from the mold resin or may be the same material as the mold resin.

In the electromagnetic coil according to the present invention, the diode can be attached by utilizing the diode attaching hole after covering the coil main body obtained by winding the magnet wire to the bobbin with the mold resin. Therefore, it is possible to apply a inspect such as the Layer Short test to the winding wire (the magnet wire) which is molded (covered with the mold resin) to the same state as the final product and to which the flywheel diode is not connected. Thus, it is possible to carry out the higher-precision inspect which is not affected by the diode, and it is possible to more securely find a defective item of the electromagnetic coil with the flywheel diode.

According to one aspect of the present invention, both of the first terminal and the second terminal have an external connection portion for connecting to an external circuit in a leading end portion thereof, have a support portion for supporting the terminal to the first flange in a base end portion thereof, and are provided with the diode connecting portion between the leading end portion and the base end portion.

The flywheel diode is typically a surface mount diode. The present invention does not exclude use of an axial lead diode.

Further, the electromagnetic coil according to the present invention may be further provided with a connector mating portion which the leading end portion of the first terminal and the leading end portion of the second terminal are arranged inside and which is mated to a connector of the external circuit for connecting the magnet wire to the external circuit.

Further, a solenoid valve according to the present invention is provided with the resin molded electromagnetic coil according to any one of the aspects of the present invention mentioned above.

Further, a method of manufacturing an electromagnetic coil according to the present invention is defined in claim 8.

Further, the manufacturing method may include an inspection process of an inspection for whether or not an insulating coated layer of the magnet wire is damaged, after the molding step and before the diode attaching step, and the testing step may be conducted by a Layer Short test.

### EFFECT OF INVENTION

According to the present invention, it is possible to conduct a higher-precision product inspection of the electromagnetic coil provided with the flywheel diode, in particular the winding wire, and it is possible to more securely find a defective item.

The other objects, features and advantages of the present invention can be apparent from the following description of embodiments according the present invention which will be given on the basis of the accompanying drawings. It is apparent for a person skilled in the art that the present invention is not limited to the following embodiments, but can be variously modified within the scope of the claims. Further, in the drawings, same reference numerals denote same or corresponding portions.

### BRIEF DESCRIPTION OF DRAWINGS

Fig. 1 is a perspective view showing a resin molded electromagnetic coil according to an embodiment of the present invention.
Fig. 2 is an exploded perspective view showing a positional relationship between a bobbin of the electromagnetic coil according to the embodiment mentioned above, a connection terminal and a diode.
Fig. 3 is a perspective view showing a step of manufacturing the electromagnetic coil according to the embodiment mentioned above (in a state in which the connection terminal is attached to the bobbin).
Fig. 4 is a perspective view showing the step of manufacturing the electromagnetic coil according to the embodiment mentioned above (in a state in which a magnet wire is wound to the bobbin and connected to the connection terminal).
Fig. 5 is a perspective view showing the step of manufacturing the electromagnetic coil according to the embodiment mentioned above (in a state after being covered with a mold resin).
Fig. 6 is a bottom elevational view showing the step of manufacturing the electromagnetic coil according to the embodiment mentioned above (in a state after being covered with the mold resin).
Fig. 7 is a cross sectional view (a cross sectional view as viewed from an arrow A-A in Fig. 6) showing the step of manufacturing the electromagnetic coil according to the embodiment mentioned above (in a state after being covered with a mold resin).
Fig. 8 is a bottom elevational view showing the step of manufacturing the electromagnetic coil according to the embodiment mentioned above (in a state in which the diode is attached).
Fig. 9 is a cross sectional view (a cross sectional view as viewed from an arrow A-A in Fig. 8) showing the step of manufacturing the electromagnetic coil according to the embodiment mentioned above (in a state in which the diode is attached).
Fig. 10 is a bottom elevational view showing the step of manufacturing the electromagnetic coil according to the embodiment mentioned above (in a state in which a diode attaching hole is sealed).
Fig. 11 is a cross sectional view (a cross sectional view as viewed from an arrow A-A in Fig. 10) showing the step of manufacturing the electromagnetic coil according to the embodiment mentioned above (in a state in which the diode attaching hole is sealed).
Fig. 12 is a bottom elevational view showing the other structure example of the diode attaching hole of the electromagnetic coil according to the embodiment mentioned above.
Fig. 13 is a cross sectional view (a cross sectional view as viewed from an arrow A-A in Fig. 12) showing the other structure example of the diode attaching hole of the electromagnetic coil according to the embodiment mentioned above.
Fig. 14 is a cross sectional view (a cross sectional view as viewed from an arrow D-D in Fig. 12) showing the other structure example of the diode attaching hole of the electromagnetic coil according to the embodiment mentioned above.

### DESCRIPTION OF EMBODIMENTS

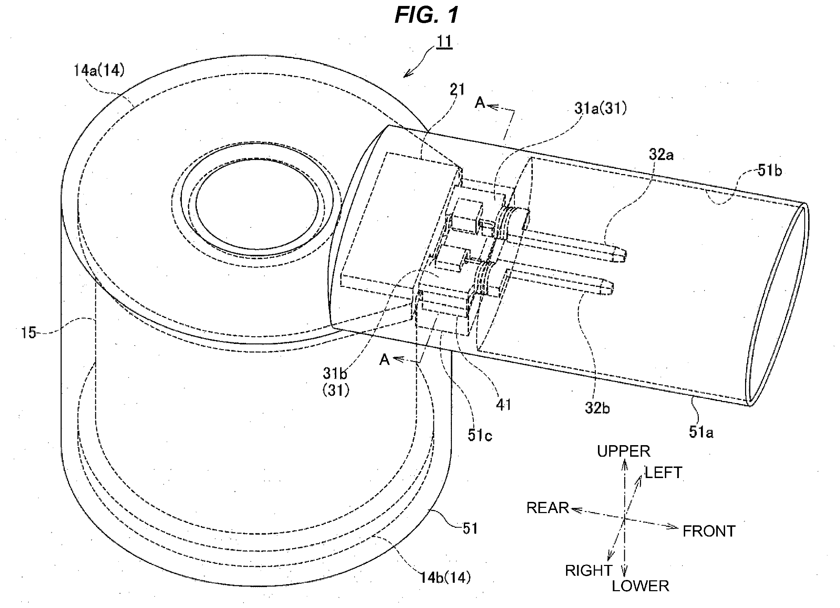

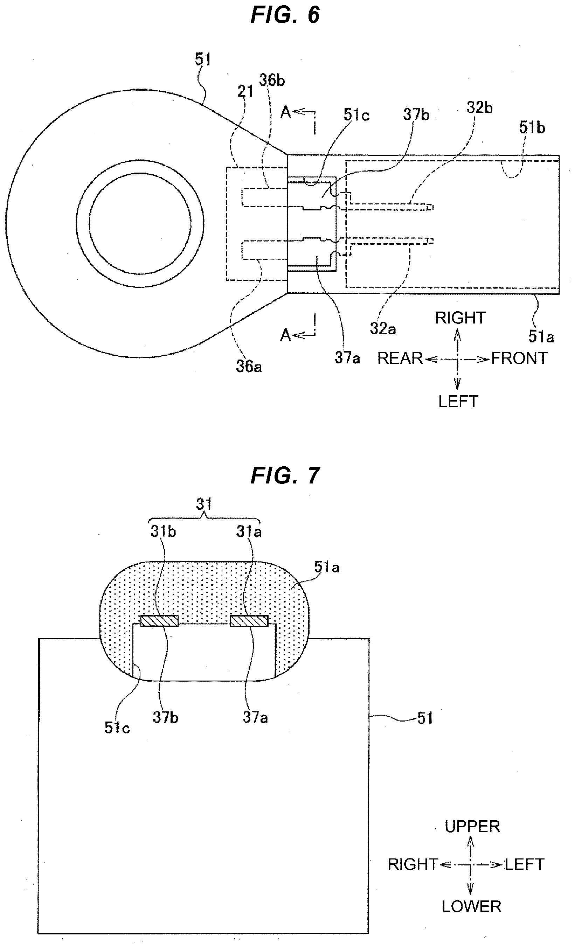

As shown in Figs. 1 to 11, a resin molded electromagnetic coil 11 according to an embodiment of the present invention is constructed by covering a coil main body, and a pair of connection terminals 31 (31a and 31b) with a molded resin 51. The coil main body is constructed by winding a magnet wire 15 to a bobbin 12. A pair of connection terminals 31 connect the coil main body to an external circuit (an external device) for feeding an electric power to the magnet wire 15. Further, the resin molded electromagnetic coil 11 is provided with a flywheel diode 41 which is connected in parallel between both the connection terminals 31. Further, it goes without saying that the resin molded electromagnetic coil 11 according to the present invention can be preferably employed as an electromagnetic coil of a solenoid valve.

The diode 41 is connected between the connection terminals 31a and 31b through a diode attaching hole 51c after molding, as mentioned in detail later. Further, each of the drawings shows a mutually orthogonal two-dimensional or three-dimensional coordinates which represents a longitudinal direction, a lateral direction and a vertical direction, and the following description will be given on the basis of these directions. Further, the vertical direction may be referred to as a perpendicular direction, and a direction including the longitudinal direction and the lateral direction and being orthogonal to the perpendicular direction may be referred to as a horizontal direction, respectively.

The bobbin 12 is constructed by a tubular portion 13 having a cylindrical shape, and a pair of flanges 14 disposed in both ends of the tubular portion 13. Further, a pair of flanges 14 are constructed by a first flange 14a which horizontally protrudes circumferentially from an upper end portion of the tubular portion 13, and a second flange 14b which horizontally protrudes circumferentially from a lower end portion of the tubular portion 13. Further, a terminal attaching portion 21 for installing a connection terminal 31 is formed in a front edge portion of an upper surface of the first flange 14a.

A pair of connection terminals 31 installed in the terminal attaching portion 21, that is, a first terminal 31a and a second terminal 31b are both made of an electrically conductive material, and are installed so as to extend in parallel to each other at a fixed distance laterally and horizontally forward. The first terminal 31a corresponds to one connection terminal among the connection terminals 31 and the second terminal 31b corresponds to the other connection terminal.

Further, leading end portions (front end portions) of the respective connection terminals 31a and 31b are provided with external connection portions 32a and 32b which electrically connect to an external circuit (not shown). Further, base end portions (rear end portions) of the respective connection terminals 31a and 31b form support portions 36a and 36b for fixing the connection terminals 31a and 31b to the terminal attaching portion 21. Further, intermediate portions of the respective terminals 31a and 31b positioned between the leading end portions (the external connection portions 32a and 32b) and the base end portions (the support portions 36a and 36b) are set to wire connection portions 33a and 33b for connecting the magnet wire 15, and lower surfaces of the intermediate portions are set to diode connecting portions 37a and 37b connecting the diode.

The external connection portions 32a and 32b at the leading ends of the connection terminals protrude horizontally into an internal space 51b of a connector mating portion 51a mentioned later to enable an electrical connection to the external circuit.

A constriction portion 34 is formed at the wire connection portions 33a and 33b in the middle of the connection terminals, the constriction portion 34 being narrowed so as to allow the magnet wire 15 to be tied up (wound up). Further, the wire connection portions 33a and 33b at the middle of the connection terminals are provided with a protruding piece 35 which can pinch an end portion (a starting point portion 15a or an ending point portion 15b) of the magnet wire 15. The protruding piece 35 can pinch the end portion of the wire 15 between the protruding piece 35 and the upper surfaces of the wire connection portions 33a and 33b by bending downward.

In the meantime, the lower surfaces of the intermediate portions of the connection terminals are formed as flat surfaces (horizontal surfaces) expanding horizontally, and terminal electrodes 41a and 41b of a surface mount flywheel diode 41 can be connected by utilizing the horizontal surfaces (the diode connecting portions 37a and 37b).

The support portions 36a and 36b at the base ends of the connection terminals are formed into a tabular shape which expands horizontally in connection to the wire connection portions 33a and 33b and the diode connecting portions 37a and 37b. These support portions 36a and 36b can be press fitted (inserted) into terminal support holes 22a and 22b mentioned later, thereby allowing each of the connection terminals 31a and 31b to be supported to the terminal attaching portion 21.

In the meantime, the terminal attaching portion 21 formed in an upper surface front edge portion of the first flange 14a has in a front face thereof a terminal support hole (a first terminal support hole) 22a which can press fit the support portion 36a of the first terminal 31a, and a terminal support hole (a second terminal support hole) 22b which can press fit the support portion 36b of the second terminal 31b.

The coil main body (the bobbin 12 and the wire 15) and the connection terminals 31a and 31b (except the external connection portions 32a and 32b) are covered with the mold resin, and the connector mating portion 51a is integrally formed concurrently with the molding time. The connector mating portion 51a is configured to have an outer shape which adapts to the specification of the external device to be connected, for enabling the connection to the external device in a tubular portion extending horizontally forward from the terminal attaching portion 21 of the first flange 14a.

Further, a rear end portion of the connector mating portion 51a is formed as a solid structure (a structure filled with the resin) for covering and sealing the connection portion between the connection terminals 31a and 31b and the wire 15. On the contrary, a front end portion of the connector mating portion 51a is formed as a hollow structure (a structure having an internal space 51b) for exposing the external connection portions 32a and 32b of the connection terminals 31a and 31b and enabling the electrical connection to the external device.

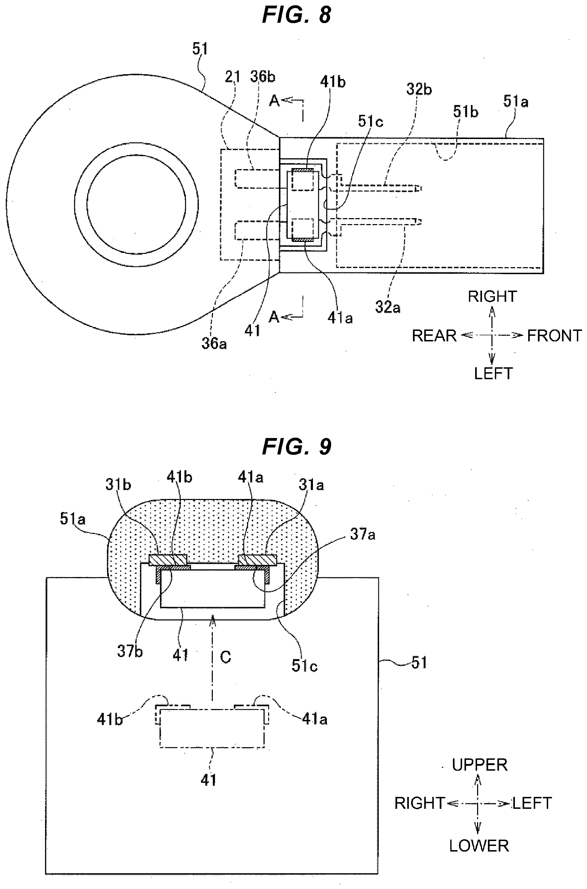

In a lower surface portion at a rear end portion of the connector mating portion 51a, the diode attaching hole 51c is formed for allowing the diode 41 to be attached between the connection terminals 31a and 31b after molding (refer to Figs. 1, 5, 6 and 7). The diode attaching hole 51c is a hole which is communicated with the diode connecting portions 37a and 37b in a lower surface of the intermediate portions of both the connection terminals 31a and 31b from the lower surface at the rear end portion of the connector mating portion 51a, and the terminal electrodes 41a and 41b of the diode 41 can be connected to the diode connecting portions 37a and 37b through the diode attaching hole 51c (refer to Figs. 8 and 9).

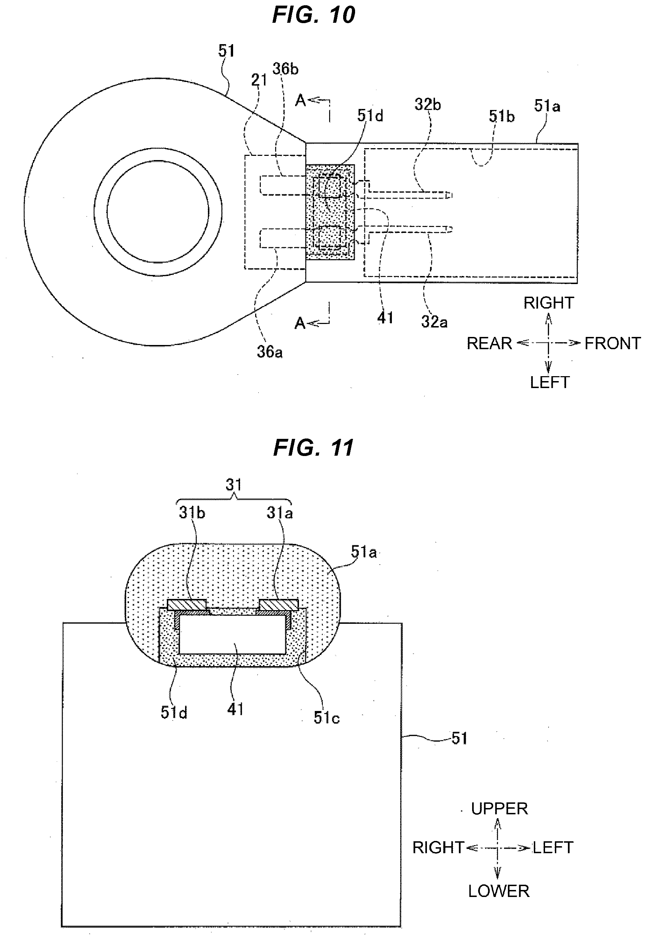

The diode attaching hole 51c is closed by being filled with a sealing resin 51d, for example, an epoxy resin, after connecting the diode 41 (refer to Figs. 10 and 11).

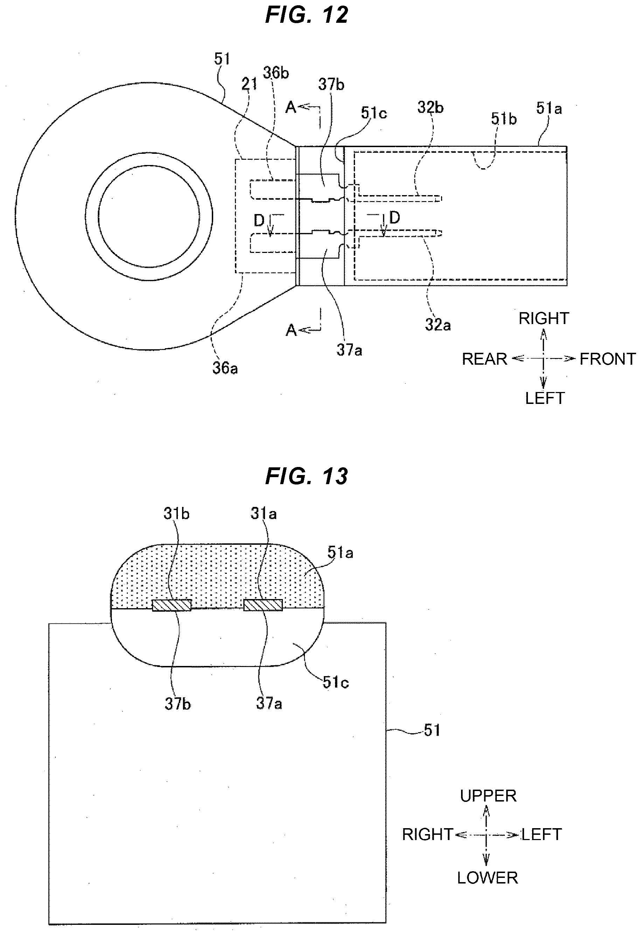

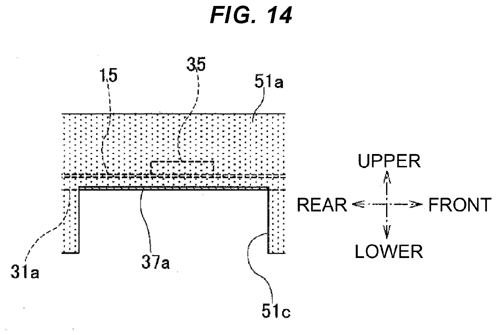

The diode attaching hole 51c is not limited its shape as long as the diode attaching hole 51c is communicated with the diode connecting portions 37a and 37b and can connect the diode 41 between the connection terminals 31a and 31b after molding. For example, a periphery of an internal space receiving the diode 41 is not necessarily enclosed completely, but may be formed into a groove shape in which both ends are opened as shown in Figs. 12 to 14.

A process of manufacturing the electromagnetic coil according to the present embodiment will be mentioned as follows.

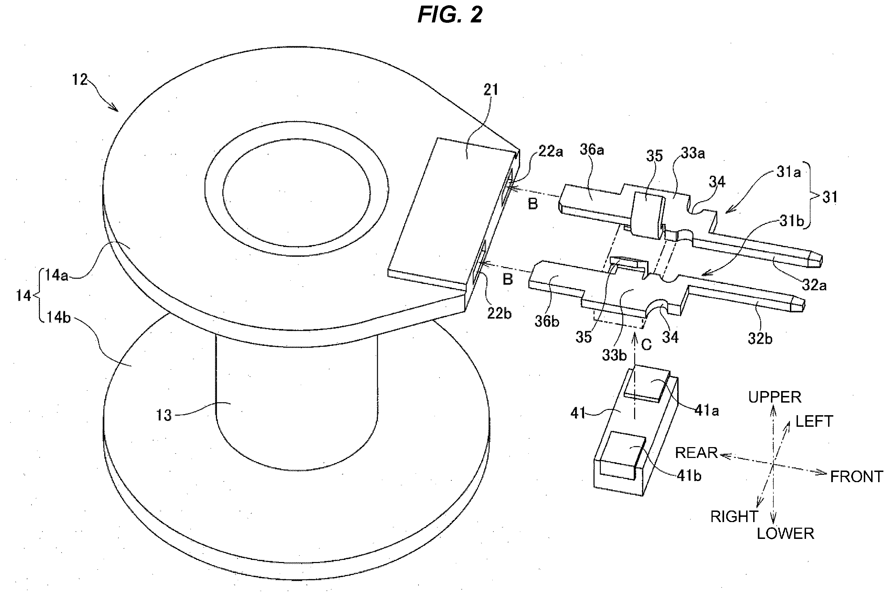

### (1) Attachment of connection terminal to bobbin (refer to Figs. 2 to 3)

The first terminal 31a and the second terminal 31b are fixed to the first flange 14a of the bobbin 12 by press fitting the support portions 36a and 36b of the respective connection terminals 31a and 31b to the respective terminal support holes 22a and 22b of the terminal attaching portion 21 in the upper surface of the first flange 14a.

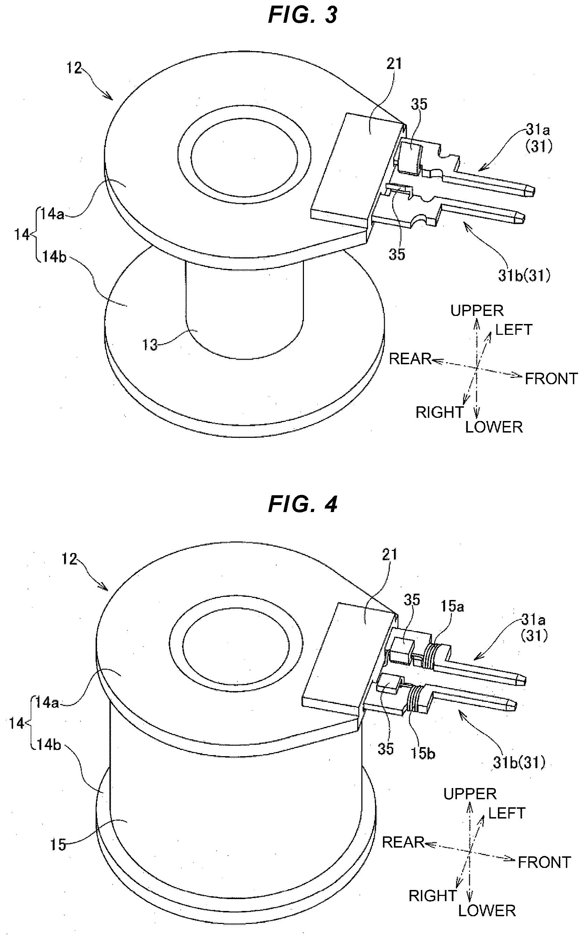

### (2) Winding of magnet wire to bobbin and connection to connection terminal (refer to Fig. 4)

The starting point portion 15a of the magnet wire 15 drawn from a wire feeding reel of a coil winding machine (not shown) is locked by being wounded to the constriction portion 34 of the first terminal 31a. The bobbin 12 is rotated in this state, and the wire 15 is wound to an outer peripheral surface of the tubular portion 13 in multiple layers.

In this case, the connection terminals 31a and 31b do not prevent a winding work of the wire 15 and it is possible to efficiently perform the work. This is because the terminal attaching portion 21 exists in the upper surface of the first flange 14a, the connection terminals 31a and 31b extend horizontally in parallel to the upper surface of the first flange 14a, the connection terminals 31a and 31b are arranged while avoiding a path of the wire 15 wound to the bobbin 12 from the automatic coil winding machine, and the diode 41 is not attached to the connection terminals 31a and 31b.

After the winding work of the wire 15 to the tubular portion 13 is finished, the ending point portion 15b of the wire 15 is locked by being wound to the constriction portion 34 of the second terminal 31b.

Further, the protruding piece 35 of the first terminal 31a is bent, the starting point portion 15a of the wire 15 is sandwiched between the protruding piece 35 and the terminal intermediate portion (the wire connection portion 33a), the protruding piece 35 and the starting point portion 15a are pinched and pressurized by an electrode (not shown) of a fusing welding machine from above and below so as to be closely attached, and an insulating coated layer of the wire 15 is melted by energizing them, thereby welding and electrically connecting the starting point portion 15a of the wire 15 and the first terminal 31a. In the same manner, the protruding piece 35 of the second terminal 31b is bent, the ending point portion 15b of the wire 15 is sandwiched between the protruding piece 35 and the terminal intermediate portion, the protruding piece 35 and the ending point portion 15b of the wire are pinched and pressurized by the electrode (not shown) of the fusing welding machine from above and below so as to be closely attached, and the insulating coated layer of the wire 15 is melted by energizing them, thereby welding and electrically connecting the ending point portion 15b of the wire 15 and the second terminal 31b.

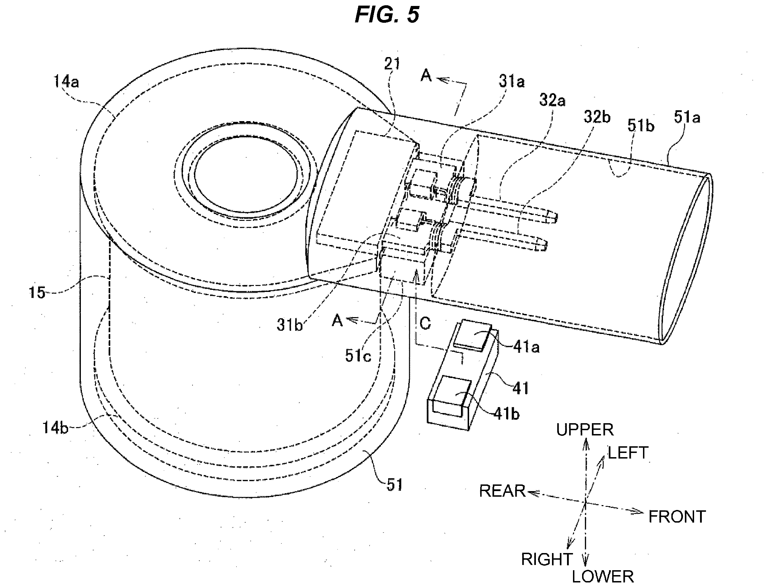

### (3) Mold (refer to Figs. 5 to 7)

A whole of the coil is installed within the metal mold and the mold resin is injected and filled around the coil main body. At the same time, the connector mating portion 51a is integrally formed. Further, the diode attaching hole 51c at the lower surface of the rear end portion of the connector mating portion 51a is formed at the same time. The internal space 51b of the leading end portion of the connector mating portion 51a and the diode attaching hole 51c at the rear end portion of the connector mating portion may be formed by arranging an insert for mold. For example, polyphenylene sulfide (PPS) can be preferably used for the mold resin.

### (4) Test of wire

A test is conducted whether or not the insulating coated layer of the wire 15 wound to the bobbin 12 is damaged. The test is conducted by the Layer Short test, and the subsequent steps are applied only to good products in which any problem is not found by this test to obtain the finished product. When conducting the test, the wire 15 and the connection portion between the wire 15 and the connection terminals 31a and 31b are covered with the mold resin, the diode 41 is not connected yet. Therefore, the high-precision test can be conducted without being affected by the diode 41, and the defective item can be more securely found.

### (5) Attachment of diode (refer to Figs. 5, 8 and 9)

The diode 41 is attached between the diode connecting portions 37a and 37b of both the connection terminals 31a and 31b which are exposed to the upper surface of the diode attaching hole 51c (refer to an arrow C in each of the drawings). More specifically, each of the terminal electrodes 41a and 41b of the diode 41 are connected to each of the diode attaching portions 37a and 37b by soldering. At this time, according to the present embodiment, the terminal electrodes are soldered to the diode attaching portions 37a and 37b which correspond to comparatively wide flat surfaces in the bottom surface of the intermediate portion of the connection terminal. Therefore, it is possible to enhance a reliability of electrical connection of the diode 41.

### (6) Sealing of diode attaching hole

The diode attaching hole 51c after attaching the diode 41 thereto is filled with the epoxy resin 51d, thereby closing the diode attaching hole 51c. Thus, the diode 41 and the diode connecting portions 37a and 37b of the connection terminals 31a and 31b are sealed, and it is possible to prevent the moisture and the foreign matter from entering from the diode attaching hole 51c.

### REFERENCE SIGNS LIST

11 resin molded electromagnetic coil
12 bobbin
13 tubular portion
14 flange
14a first flange
14b second flange
15 magnet wire
21 terminal attaching portion
22a, 22b terminal support hole
31 connection terminal
31a first terminal
31b second terminal
32a, 32b external connection portion
33a, 33b wire connection portion
34 constriction portion
35 protruding piece
36a, 36b support portion
37a, 37b diode connecting portion
41 flywheel diode
41a, 41b terminal electrode of diode
51 mold resin
51a connector mating portion
51b internal space of connector mating portion
51c diode attaching hole
51d sealing resin (epoxy resin)

## Claims

1. A resin molded electromagnetic coil comprising:
a magnet wire (15) which is wound to a bobbin (12);
a pair of connection terminals (31) for electrically connecting the magnet wire (15) to an external circuit;
the resin molded electromagnetic coil being constructed by covering the magnet wire (15) and the pair of connection terminals (31) with a mold resin; and
a flywheel diode (41) which is connected between the pair of connection terminals (31),
wherein the bobbin (12) comprises:
a tubular portion (13) to which the magnet wire (15) is wound;
a first flange (14a) which is disposed in one end portion of the tubular portion (13) and protrudes outward from an outer peripheral surface of the tubular portion (13); and
a second flange (14b) which is disposed in the other end portion of the tubular portion (13) and protrudes outward from the outer peripheral surface of the tubular portion (13),
wherein the pair of connection terminals (31) include a first terminal (31a) and a second terminal (31b) which are disposed so as to extend in parallel to each other and outward from an edge portion of the first flange (14a),
wherein the first terminal (31a) comprises a diode connecting portion (37a) to which a starting point of the magnet wire (15) is connected, and to which the flywheel diode (41) is connectable,
wherein the second terminal (31b) comprises a diode connecting portion (37b) to which an ending point of the magnet wire (15) is connected, and to which the flywheel diode (41) is connectable,
wherein the flywheel diode (41) is connected between the diode connecting portion (37a) of the first terminal (31a) and the diode connecting portion (37b) of the second terminal (31b),
**characterised in that** a covering layer made of the mold resin has a diode attaching hole (51c) which is communicated with the diode connecting portion (37a) of the first terminal (31a) and the diode connecting portion (37b) of the second terminal (31b) exposing the diode connecting portions (37a, 37b) at a surface of the diode attaching hole (51c) in such a manner that the flywheel diode (41) is attachable after forming the covering layer, and is capable of receiving the flywheel diode (41), and wherein the diode attaching hole (51c) is closed by a sealing material which is provided separately from the mold resin.

2. The resin molded electromagnetic coil according to claim 1, wherein both of the first terminal (31a) and the second terminal (31b) have an external connection portion (32a, 32b) for connecting to an external circuit in a leading end portion thereof, have a support portion (36a, 36b) for supporting the terminal (31a, 31b) to the first flange (14a) in a base end portion thereof,
and are provided with the diode connecting portion (37a, 37b) between the leading end portion and the base end portion.

3. The resin molded electromagnetic coil according to claim 1 or 2, wherein the flywheel diode (41) is a surface mount diode.

4. The resin molded electromagnetic coil according to any one of claims 1 to 3, wherein the sealing material is a resin.

5. The resin molded electromagnetic coil according to claim 4, wherein the sealing material is an epoxy resin.

6. The resin molded electromagnetic coil according to any one of claims 1 to 5, further comprising a connector mating portion (51a) in which the leading end portion of the first terminal (31a) and the leading end portion of the second terminal (31b) are arranged inside and which is matable to a connector of the external circuit for connecting the magnet wire (15) to the external circuit.

7. A solenoid valve comprising the resin molded electromagnetic coil according to any one of claims 1 to 6.

8. A method of manufacturing a resin molded electromagnetic coil comprising:
a terminal attaching step of attaching a pair of connection terminals (31), for connecting to an external circuit, to a bobbin (12) to which a magnet wire (15) is windable;
wherein the bobbin (12) comprises:
a tubular portion (13) to which the magnet wire (15) is windable;
a first flange (14a) which is disposed in one end portion of the tubular portion (13) and protrudes outward from an outer peripheral surface of the tubular portion (13); and
a second flange (14b) which is disposed in the other end portion of the tubular portion (13) and protrudes outward from the outer peripheral surface of the tubular portion (13),
wherein the pair of connection terminals (31) include a first terminal (31a) and a second terminal (31b) which are disposed so as to extend in parallel to each other and outward from an edge portion of the first flange (14a),
a wire winding step of winding the magnet wire (15) to the bobbin (12) as well as connecting a starting point of the magnet wire (15) to one of the pair of connection terminals (31), and connecting an ending point of the magnet wire (15) to the other of the pair of connection terminals (31); and
a molding step of covering the bobbin (12) to which the pair of connection terminals (31) are attached and the magnet wire (15) is wound, with a mold resin, such that the magnet wire (15) and the connection terminals (31) are covered with the mold resin,
wherein both of the pair of connection terminals (31) are provided with a diode connecting portion (37a, 37b) to which a flywheel diode (41) is connectable,
wherein a resin covering layer formed in the molding step has a diode attaching hole (51c) which is communicated with the diode connecting portions (37a, 37b) of the pair of connection terminals (31) exposing the diode connecting portions (37a, 37b) at a surface of the diode attaching hole (51c) in such a manner that the flywheel diode (41) is attachable after forming the resin covering layer and is capable of receiving the flywheel diode (41),
wherein the manufacturing method comprises:
a diode attaching step of inserting the flywheel diode (41) into the diode attaching hole (51c) and connecting the flywheel diode (41) between the diode connecting portions (37a, 37b) of the pair of connection terminals (31), after the molding step; and
a diode sealing step of closing the diode attaching hole (51c) with a sealing material which is provided separately from the mold resin, after the diode attaching step.

9. The method of manufacturing the resin molded electromagnetic coil according to claim 8, further comprising:
a testing step of testing whether or not an insulating coated layer of the magnet wire (15) is damaged, after the molding step and before the diode attaching step.

10. The method of manufacturing the resin molded electromagnetic coil according to claim 9, wherein the testing step is conducted by a Layer Short test.

## Patentansprüche

1. Eine aus Harz geformte elektromagnetische Spule, umfassend:
einen Magnetdraht (15), der auf eine Spule (12) gewickelt ist;
ein Paar Verbindungskontakte (31) zum elektrischen Verbinden des Magnetdrahts (15) mit einer externen Schaltung;
die aus Harz geformte elektromagnetische Spule, die durch Bedecken des Magnetdrahts (15) und des Paars von Verbindungskontakten (31) mit einem Formharz hergestellt ist; und
eine Freilaufdiode (41), die zwischen dem Paar Verbindungskontakte (31) angeschlossen ist;
wobei die Spule (12) umfasst:
einen röhrenförmigen Abschnitt (13), auf den der Magnetdraht (15) gewickelt ist;
einen ersten Flansch (14a), der an einem Ende des röhrenförmigen Abschnitts (13) angeordnet ist und sich nach außen aus einer Außenumfangsfläche des röhrenförmigen Abschnitts (13) erstreckt;
einen zweiten Flansch (14b), der am anderen Ende des röhrenförmigen Abschnitts (13) angeordnet ist und sich nach außen aus der Außenumfangsfläche des röhrenförmigen Abschnitts (13) vorsteht;
wobei das Paar von Verbindungskontakten (31) einen ersten Anschluss (31a) und einen zweiten Anschluss (31b) umfasst, die so angeordnet sind, dass sie parallel zueinander und nach außen von einem Randbereich des ersten Flanschs (14a) erstrecken;
wobei der erste Anschluss (31a) einen Diodenanschlussbereich (37a) umfasst, an den ein Anfangspunkt des Magnetdrahts (15) angeschlossen ist und an den die Freilaufdiode (41) anschließbar ist;
wobei der zweite Anschluss (31b) einen Diodenanschlussbereich (37b) umfasst, an den ein Endpunkt des Magnetdrahts (15) angeschlossen ist und an den die Freilaufdiode (41) anschließbar ist;
wobei die Freilaufdiode (41) zwischen dem Diodenanschlussbereich (37a) des ersten Anschlusses (31a) und dem Diodenanschlussbereich (37b) des zweiten Anschlusses (31b) angeschlossen ist;
**dadurch gekennzeichnet, dass** eine Abdeckungsschicht, die aus dem Formharz ausgebildet ist, ein Diodenbefestigungsloch (51c), das mit dem Diodenanschlussbereich (37a) des ersten Anschlusses (31a) und dem Diodenanschlussbereich (37b) des zweiten Anschlusses (31b) verbunden ist, aufweist, das die Diodenanschlussbereiche (37a, 37b) an der Oberfläche des Diodenbefestigungslochs (51c) derart freilegt, dass die Freilaufdiode (41) nach Bilden der Abdeckungsschicht befestigt werden kann, und geeignet ist, die Freilaufdiode (41) aufzunehmen, und wobei das Diodenbefestigungsloch (51c) durch ein Dichtmaterial verschlossen ist, das separat vom Formharz bereitgestellt wird.

2. Die aus Harz geformte elektromagnetische Spule nach Anspruch 1,
wobei der erste Anschluss (31a) und der zweite Anschluss (31b) einen externen Anschlussbereich (32a, 32b) an einem vorderen Endabschnitt, zum Verbinden mit einer externen Schaltung, und einen Stützbereich (36a, 36b) an einem Basisendabschnitt, zum Unterstützen des Anschlusses (31a, 31b) an den ersten Flansch (14a), aufweisen, und mit dem Diodenanschlussbereich (37a, 37b) zwischen dem vorderen Endabschnitt und dem Basisendabschnitt versehen sind.

3. Die aus Harz geformte elektromagnetische Spule nach Anspruch 1 oder 2,
wobei die Freilaufdiode (41) eine oberflächenmontierte Diode ist.

4. Die aus Harz geformte elektromagnetische Spule nach einem der Ansprüche 1 bis 3,
wobei das Dichtmaterial ein Harz ist.

5. Die aus Harz geformte elektromagnetische Spule nach Anspruch 4,
wobei das Dichtmaterial ein Epoxidharz ist.

6. Die aus Harz geformte elektromagnetische Spule nach einem der Ansprüche 1 bis 5, ferner umfassend einen Stecker-Paarungsbereich (Sla), in dem der vordere Endabschnitt des ersten Anschlusses (31a) und der vordere Endabschnitt des zweiten Anschlusses (31b) innerhalb angeordnet sind und der mit einem Stecker des externen Stromkreises zum Verbinden des Magnetdrahts (15) mit dem externen Stromkreis paarbar ist.

7. Ein Magnetventil, umfassend die aus Harz geformte elektromagnetische Spule gemäß einem der Ansprüche 1 bis 6.

8. Ein Verfahren zur Herstellung einer aus Harz geformten elektromagnetischen Spule, umfassend:
einen Anschlussbefestigungs-Schritt, bei dem ein Paar Verbindungskontakte (31) zum Verbinden mit einem externen Stromkreis an einen Spulenkörper (12) angebracht wird, zu dem ein Magnetdraht (15) aufgerollt werden kann;
wobei der Spulenkörper (12) umfasst:
einen Rohrabschnitt (13), an den der Magnetdraht (15) aufgerollt werden kann;
einen ersten Flansch (14a), der in einem Endabschnitt des Rohrabschnitts (13) angeordnet ist und von der äußeren Umfangsfläche des Rohrabschnitts (13) nach außen hervorsteht; und
einen zweiten Flansch (14b), der im anderen Endabschnitt des Rohrabschnitts (13) angeordnet ist und von der äußeren Umfangsfläche des Rohrabschnitts (13) nach außen hervorsteht,
wobei das Paar der Verbindungskontakte (31) einen ersten Anschluss (31a) und einen zweiten Anschluss (31b) umfasst, die derart angeordnet sind, um sich parallel zueinander von einem Randbereich des ersten Flansches (14a) nach außen zu erstrecken,
einen Drahtaufwickelungs-Schritt, bei dem der Magnetdraht (15) am Spulenkörper (12) aufgerollt wird, wobei ein Anfangspunkt des Magnetdrahts (15) mit einem der Verbindungskontakte (31) verbunden und ein Endpunkt des Magnetdrahts (15) mit dem anderen der Verbindungskontakte (31) verbunden wird; und
einen Vergussschritt, bei dem der Spulenkörper (12), an dem das Paar der Verbindungskontakte (31) angebracht und der Magnetdraht (15) aufgerollt ist, mit einem Formharz überzogen wird, sodass der Magnetdraht (15) und die Verbindungskontakte (31) mit dem Formharz bedeckt sind,
wobei beide der Verbindungskontakte (31) mit einem Diodenanschlussbereich (37a, 37b) versehen sind, an den eine Freilaufdiode (41) anschließbar ist,
wobei eine im Vergussschritt gebildete Formharzabdeckungsschicht ein Diodenbefestigungsloch (51c) aufweist, das mit den Diodenanschlussbereichen (37a, 37b) des Paares der Verbindungskontakte (31) kommuniziert, wobei die Diodenanschlussbereiche (37a, 37b) an einer Oberfläche des Diodenbefestigungslochs (51c) so freiliegen, dass die Freilaufdiode (41) nach Bildung der Formharzabdeckungsschicht angebracht werden kann und in der Lage ist, diese aufzunehmen,
wobei das Herstellungsverfahren umfasst:
einen Diodenanbringungsschritt, bei dem die Freilaufdiode (41) in das Diodenbefestigungsloch (51c) eingeführt und zwischen den Diodenanschlussbereichen (37a, 37b) des Paares der Verbindungskontakte (31) nach dem Vergussschritt verbunden wird; und
einen Diodenversiegelungsschritt, bei dem das Diodenbefestigungsloch (51c) mit einem Dichtmaterial verschlossen wird, das getrennt vom Vergussharz nach dem Diodenanbringungsschritt bereitgestellt wird.

9. Das Verfahren zur Herstellung der aus Harz geformten elektromagnetischen Spule gemäß Anspruch 8, ferner umfassend:
einen Testschritt, bei dem nach dem Vergussschritt und vor dem Diodenanbringungsschritt überprüft wird, ob eine isolierende Beschichtung des Magnetdrahts (15) beschädigt ist.

10. Das Verfahren zur Herstellung der aus Harz geformten elektromagnetischen Spule gemäß Anspruch 9, wobei der Testschritt durch einen Layer-Short-Test durchgeführt wird.

## Revendications

1. Bobine électromagnétique moulée en résine comportant :
un fil magnétique (15) qui est enroulé sur une armature (12) ;
une paire de bornes de connexion (31) pour connecter électriquement le fil magnétique (15) à un circuit externe ;
la bobine électromagnétique moulée en résine étant construite en recouvrant le fil magnétique (15) et la paire de bornes de connexion (31) d'une résine de moulage ; et
une diode de roue libre (41) qui est connectée entre la paire de bornes de connexion (31),
dans laquelle l'armature (12) comporte :
une partie tubulaire (13) sur laquelle le fil magnétique (15) est enroulé ;
une première collerette (14a) qui est disposée dans une partie d'extrémité de la partie tubulaire (13) et fait saillie vers l'extérieur depuis une surface périphérique extérieure de la partie tubulaire (13) ; et
une seconde collerette (14b) qui est disposée dans l'autre partie d'extrémité de la partie tubulaire (13) et qui fait saillie vers l'extérieur depuis la surface périphérique extérieure de la partie tubulaire (13),
dans laquelle les bornes de la paire de bornes de connexion (31) incluent une première borne (31a) et une seconde borne (31b) qui sont disposées de manière à s'étendre parallèlement l'une à l'autre et vers l'extérieur depuis une partie de bord de la première collerette (14a),
dans laquelle la première borne (31a) comporte une partie de connexion de diode (37a) à laquelle un point de début du fil magnétique (15) est connecté, et à laquelle la diode de roue libre (41) peut être connectée,
dans laquelle la seconde borne (31b) comporte une partie de connexion de diode (37b) à laquelle un point de fin du fil magnétique (15) est connecté, et à laquelle la diode de roue libre (41) peut être connectée,
dans laquelle la diode de roue libre (41) est connectée entre la partie de connexion de diode (37a) de la première borne (31a) et la partie de connexion de diode (37b) de la seconde borne (31b),
**caractérisée en ce qu'**une couche de recouvrement constituée de résine de moulage a un trou de fixation de diode (51c) qui est en communication avec la partie de connexion de diode (37a) de la première borne (31a) et la partie de connexion de diode (37b) de la seconde borne (31b) en exposant les parties de connexion de diode (37a, 37b) sur une surface du trou de fixation de diode (51c) d'une telle manière que la diode de roue libre (41) peut être fixée après la formation de la couche de revêtement, et peut recevoir la diode de roue libre (41), et dans laquelle le trou de fixation de diode (51c) est fermé par un matériau d'étanchéité qui est fourni séparément de la résine de moulage.

2. Bobine électromagnétique moulée en résine selon la revendication 1, dans laquelle la première borne (31a) et la seconde borne (31b) ont toutes deux une partie de connexion externe (32a, 32b) pour une connexion à un circuit externe dans une partie d'extrémité avant de celle-ci, ont une partie de support (36a, 36b) pour supporter la borne (31a, 31b) sur la première collerette (14a) dans une partie d'extrémité de base de celle-ci, et sont pourvues de la partie de connexion de diode (37a, 37b) entre la partie d'extrémité avant et la partie d'extrémité de base.

3. Bobine électromagnétique moulée en résine selon la revendication 1 ou 2, dans laquelle la diode de roue libre (41) est une diode à montage en surface.

4. Bobine électromagnétique moulée en résine selon l'une quelconque des revendications 1 à 3, dans laquelle le matériau d'étanchéité est une résine.

5. Bobine électromagnétique moulée en résine selon la revendication 4, dans laquelle le matériau d'étanchéité est une résine époxyde.

6. Bobine électromagnétique moulée en résine selon l'une quelconque des revendications 1 à 5, comportant en outre une partie d'appariement de connecteurs (51a) dans laquelle la partie d'extrémité avant de la première borne (31a) et la partie d'extrémité avant de la seconde borne (31b) sont agencées à l'intérieur et qui peut être appariée à un connecteur du circuit externe pour connecter le fil magnétique (15) au circuit externe.

7. Électrovanne comportant la bobine électromagnétique moulée en résine selon l'une quelconque des revendications 1 à 6.

8. Procédé de fabrication d'une bobine électromagnétique moulée en résine comportant :
une étape de fixation de bornes consistant à fixer une paire de bornes de connexion (31), pour une connexion à un circuit externe, à une armature (12) sur laquelle un fil magnétique (15) peut être enroulé ;
dans laquelle l'armature (12) comporte :
une partie tubulaire (13) sur laquelle le fil magnétique (15) peut être enroulé ;
une première collerette (14a) qui est disposée dans une partie d'extrémité de la partie tubulaire (13) et fait saillie vers l'extérieur depuis une surface périphérique extérieure de la partie tubulaire (13) ; et
une seconde collerette (14b) qui est disposée dans l'autre partie d'extrémité de la partie tubulaire (13) et qui fait saillie vers l'extérieur depuis la surface périphérique extérieure de la partie tubulaire (13),
dans laquelle les bornes de la paire de bornes de connexion (31) incluent une première borne (31a) et une seconde borne (31b) qui sont disposées de manière à s'étendre parallèlement l'une à l'autre et vers l'extérieur depuis une partie de bord de la première collerette (14a),
une étape d'enroulement de fil consistant à enrouler le fil magnétique (15) sur l'armature (12) ainsi qu'à connecter un point de début du fil magnétique (15) à une borne de la paire de bornes de connexion (31), et connecter un point de fin du fil magnétique (15) à l'autre borne de la paire de bornes de connexion (31) ; et
une étape de moulage consistant à recouvrir l'armature (12) à laquelle les bornes de la paire de bornes de connexion (31) sont fixées et sur laquelle le fil magnétique (15) est enroulé, avec une résine de moulage, de telle sorte que le fil magnétique (15) et les bornes de connexion (31) sont recouverts de la résine de moulage,
dans lequel les bornes de la paire de bornes de connexion (31) sont toutes deux pourvues d'une partie de connexion de diode (37a, 37b) à laquelle une diode de roue libre (41) peut être connectée,
dans lequel une couche de revêtement en résine formée à l'étape de moulage a un trou de fixation de diode (51c) qui est en communication avec les parties de connexion de diode (37a, 37b) de la paire de bornes de connexion (31) en exposant les parties de connexion de diode (37a, 37b) sur une surface du trou de fixation de diode (51c) d'une telle manière que la diode de roue libre (41) peut être fixée après la formation de la couche de revêtement en résine et peut recevoir la diode de roue libre (41),
dans lequel le procédé de fabrication comporte :
une étape de fixation de diode consistant à insérer la diode de roue libre (41) dans le trou de fixation de diode (51c) et connecter la diode de roue libre (41) entre les parties de connexion de diode (37a, 37b) de la paire de bornes de connexion (31), après l'étape de moulage ; et
une étape de scellement de diode consistant à fermer le trou de fixation de diode (51c) avec un matériau d'étanchéité qui est fourni séparément de la résine de moulage, après l'étape de fixation de diode.

9. Procédé de fabrication de la bobine électromagnétique moulée en résine selon la revendication 8, comportant en outre :
une étape d'essai consistant à contrôler si une couche revêtue isolante du fil magnétique (15) est endommagée ou non, après l'étape de moulage et avant l'étape de fixation de diode.

10. Procédé de fabrication de la bobine électromagnétique moulée en résine selon la revendication 9, dans lequel l'étape d'essai est réalisée par un essai en court-circuit de couche.
